# EUROPÄISCHE PATENTSCHRIFT

(11) **EP 2 093 131 B1**
(45) Veröffentlichungstag und Bekanntmachung des Hinweises auf die Patenterteilung: **14.03.2012**
(21) Anmeldenummer: 09000995.2
(22) Anmeldetag: 24.01.2009
(51) Int. Cl.: B62D 21/11, B60K 17/16

(54) **Fahrschemel für eine Hinterachse eines Kraftfahrzeugs**
Sub-frame for the rear axle of a motor vehicle
Berceau auxiliaire pour l'essieu arrière d'un véhicule automobile

(30) Priorität: 22.02.2008 DE 102008010551
(43) Veröffentlichungstag der Anmeldung: 26.08.2009
(73) Patentinhaber: Dr. Ing. h.c. F. Porsche AG, 70435 Stuttgart (DE)
(72) Erfinder: Frasch, Wilhelm, 72644 Oberboihingen (DE); Bauer, Lutz, 71032 Boeblingen (DE); Kunert, Reinhard, 71287 Weissach (DE)

(56) Entgegenhaltungen:
- EP-A2- 1 516 765
- DE-A1-102004 012 662
- DE-C1- 19 909 945
- JP-A- 2005 280 651
- US-A1- 2006 049 603
- US-A1- 2007 024 044
- US-B1- 6 623 020

## Beschreibung

Die Erfindung bezieht sich auf einen Fahrschemel für eine Hinterachse eines Kraftfahrzeugs nach dem Oberbegriff des Anspruchs 1.

Aus der DE 199 09 945 C1 ist ein Fahrschemel für eine Hinterachse eines Kraftfahrzeugs bekannt, welcher aus einem am Fahrzeugaufbau befestigten Rahmengestell besteht, das Querträger und mit diesen verbundene Längsträger umfasst. Zwischen den Längs- und Querträgern ist ein Getriebeaggregat gelagert und an den Längsträgern sind Lagerungen für Radführungsglieder vorgesehen. Des weiteren ist aus der JP 64-40773 ein Fahrschemel bekannt, der Längsträger und Querträger umfasst und an den freien Enden der Längsträger Verbindungslager zum Fahrzeugaufbau hin angeordnet sind. Weitere Fahrschemel sind in DE19909945, DE10 2004 012 662 und US2007/024044 offenbart.

Aufgabe der Erfindung ist es, einen Fahrschemel für eine Hinterachse eines Kraftfahrzeugs zu schaffen, der gewichtsmäßig leicht und trotzdem festigkeitsmäßig stabil ausgeführt ist und als Vormontageeinheit mit Radaufhängungen sowie mit einem Differential ins Fahrzeug in einfacher Weise montierbar ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass durch das in einteiliger Bauweise hergestellte Rahmengestell, beispielsweise in Guss, keine Schweißungen und sonstige Verbindungsarten mit den Nachteilen des Verzugs und der Nacharbeit erforderlich werden. Zudem sind alle Lageraufnahmen in vorteilhafter Weise mit angeformt, so dass diese nur eine Bearbeitung zur Maßhaltigkeit unterzogen werden müssen. Insbesondere weist jeder Längsträger des Fahrschemels eine bogenförmige Durchlassöffnung zwischen eckseitigen Stützpfeilern des Rahmengestells auf, an denen die Längs- und Querträger endseitig angeformt sind und die Stützpfeiler nach außen wegragend angeordnete Arme mit den Verbindungslagern umfassen, wobei der zwischen den Stützpfeilern vorn liegende Querträger eine bogenförmige Ausrundung mit einer Lageraufnahme für ein Differential aufweist und der hinten liegende Querträger zwischen den Stützpfeilern eine gradlinige Erstreckung besitzt. Durch die Stützpfeiler werden stabile Anbindungspunkte zum Fahrzeugaufbau hin geschaffen, in denen die Längs- und Querträger festigkeitsmäßig optimal angebunden sind.

An den Stützpfeilern des Rahmengestells sind in den Armen jeweils am freien Ende die Verbindungslager angeordnet, wobei die beiden vorn liegenden Verbindungslager in einer tiefer gelegenen horizontalen Ebene angeordnet sind als die beiden weiteren hinten liegenden Verbindungslager, welche in einer höher gelegenen horizontalen Ebene liegen. Hierdurch wird eine Anpassung der Verbindungslager an die Gegebenheiten des Fahrzeugaufbaus möglich.

In der bogenförmigen Ausrundung des vorn liegenden Querträgers ist ein verstärkendes Knotenelement zur Lageraufnahme für einen vorderen Bereich des Differentials angeordnet und zwischen dem hinteren Querträger und den Stützpfeilern ist jeweils eine weitere Lageraufnahme für eine beidseitige Lagerung des hinteren Bereichs des Differentials angeordnet. Diese Lageraufnahme ist innerhalb des vorn liegenden Querträgers zwischen Seitenwandungen eingebettet gehalten wobei das Knotenelement der Lageraufnahme äußere in den Querträger zu beiden Seiten der Lageraufnahme eingeformte profilbildende Eindrückungen aufweist. Hierdurch wird eine stabile Lagerung des Differentials erreicht, in dem das Lager von Seitenwandungen des Querträgers abgestützt ist.

Der hinten liegende Querträger ist in einem unteren Bereich der Stützpfeiler des Rahmengestells angeformt und in Verlängerung des Querträgers schließen sich die wegragenden Arme für die Verbindungslager an die Stützlager an. Es ergibt sich somit ein optimaler Festigkeitsverbund zwischen den Stützpfeilern und dem Querträger wobei dieser einen rechteckförmigen Querschnitt aufweist, der hochkant zwischen den Stützpfeilern ausgerichtet angeordnet ist.

Ein Ausführungsbeispiel der Erfindung ist in den Zeichnungen dargestellt und wird im Folgenden näher beschrieben.

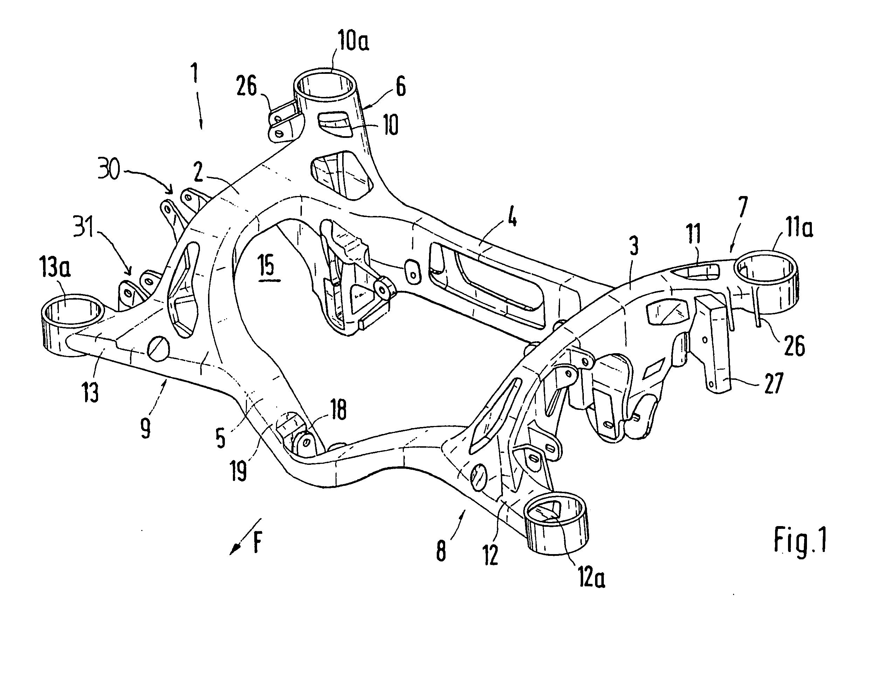

Es zeigen
- Fig. 1: eine schaubildliche Darstellung des Fahrschemels von schräg oben gesehen,

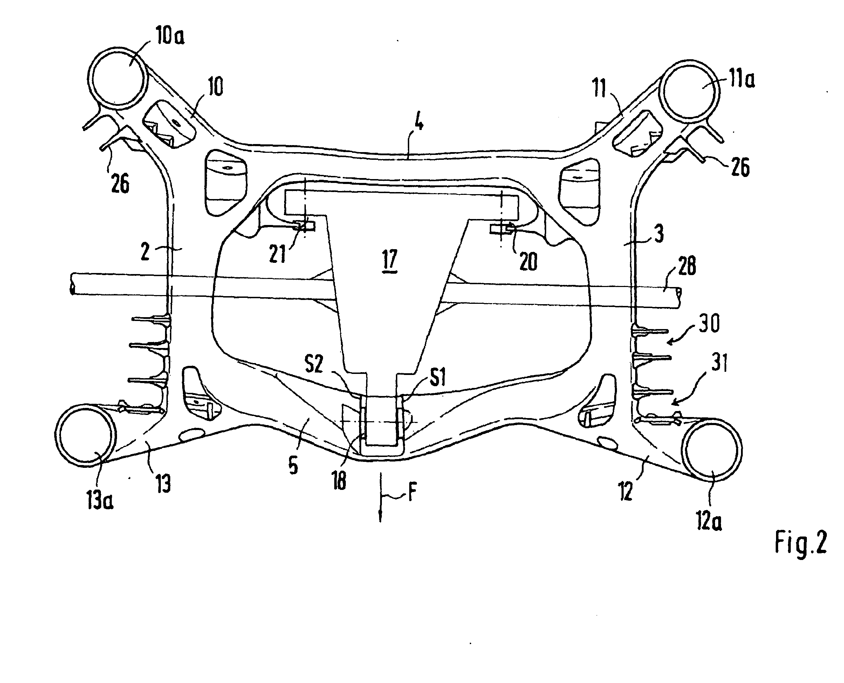

- Fig. 2: eine Draufsicht auf den Fahrschemel gemäß Fig. 1,

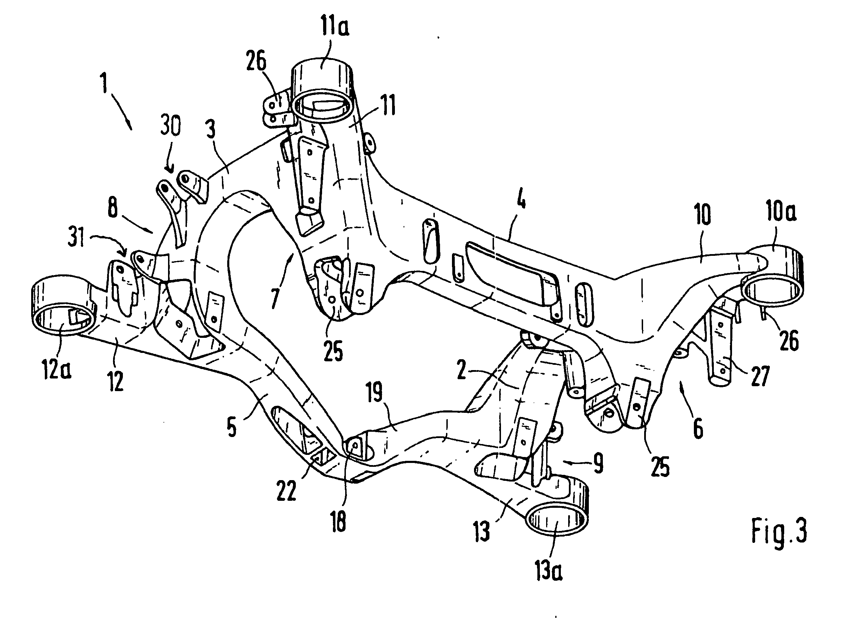

- Fig. 3: eine schaubildliche Darstellung des Fahrschemels schräg von unten her gesehen,

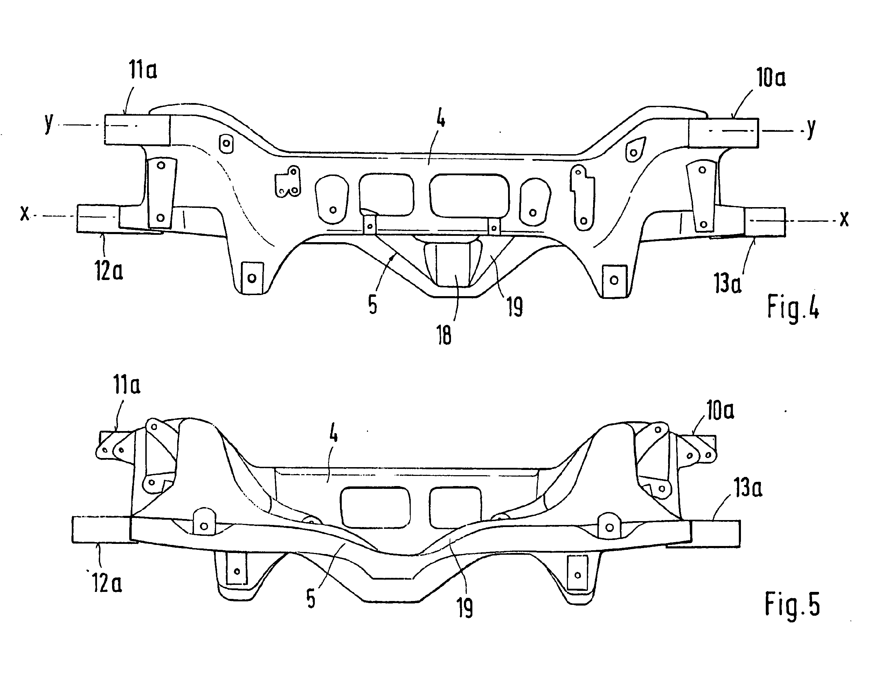

- Fig. 4: eine Rückansicht des Fahrschemels,
- Fig. 5: eine Vorderansicht des Fahrschemels und

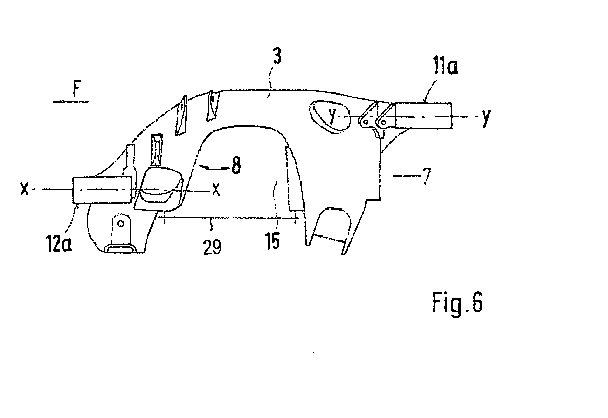

- Fig. 6: eine Seitenansicht des Fahrschemels.

Der Fahrschemel 1 besteht im Wesentlichen aus einem Rahmengestell mit zwei seitlichen Längsträgern 2, 3 und zwei Querträgern 4, 5, die beabstandet zueinander angeordnet sind und mit den Längsträgern 2, 3 über eckseitige Stützpfeiler 6, 7, 8 und 9 verbunden bzw. an diese angeformt sind. Mit den Stützpfeilern sind wegragende Arme 10, 11, 12 und 13 verbunden, die endseitig Verbindungslager 10a, 11a, 12a und 13a zum Fahrzeugaufbau hin aufweisen.

Die Längsträger 2, 3 weisen zwischen den jeweiligen Stützpfeilern 6, 9 und 7, 8 eine bogenförmige Durchlassöffnung 15 für eine Welle 28 eines Differentials 17 auf. Der vorn liegende Querträger 5 weist - in Bezug auf die Fahrtrichtung F - in einer bogenförmigen Ausrundung 19 eine Lageraufnahme 18 für einen vorderen Bereich des Differentials 17 auf. Eine weitere hintere Lagerung des Differentials 17 ist in Lagerungen 20, 21 zwischen dem hinteren Querträger 4 und den Stützpfeilern 7 und 6 vorgesehen.

Die Lageraufnahme 18 ist innerhalb des Querträgers 5 vorgesehen und zwischen Seitenwandungen S1 und S2 eingebettet angeordnet. An der Rückseite der Lageraufnahme 18 sind eingeformte profilbildende Eindrückungen 22 vorgesehen.

Die beiden vorn liegenden Verbindungslager 12, 13 sind in einer horizontalen Ebene x-x angeordnet, die tiefer gelegen ist als die in der horizontalen Ebene y-y angeordneten hinten liegenden Verbindungslager 10a, 11a in den Armen 10, 11 der Stützpfeiler 6 und 7.

Der hinten liegende Querträger 4 ist in einem unteren Bereich der Stützpfeiler 6, 7 des Rahmengestells angeformt und in Verlängerung des Querträgers 4 sind die zu beiden Seiten wegragenden Arme 10, 11 mit den Verbindungslagern 10a, 11a vorgesehen. Der Querträger 4 ist im Querschnitt rechteckförmig ausgebildet und hochkant ausgerichtet zwischen den Stützpfeilern 6 und 7 angeordnet.

Die Stützpfeiler 6, 7 zwischen dem hinten liegenden Querträger 4 und den anschließenden Längsträgern 2, 3 weisen am unteren freien Ende jeweils eine Lageraufnahme 25 für einen Radführungslenker auf. Am oberen abgekehrten Ende ist am wegragenden Arm 10, 11 eine Lageraufnahme 26 für einen Querlenker sowie eine Befestigungslasche 27 für einen Stabilisator vorgesehen.

Zwischen den Stützpfeilern 6, 9 und 7, 8 kann unterhalb der bogenförmigen Durchlassöffnung 15 ein Versteifungsriegel 29 angeordnet sein.

Der Fahrschemel weist eine Anbindung 30 für einen oberen Querlenker und für eine Anbindung 31 für eine Spurstange auf.

## Patentansprüche

1. Fahrschemel für eine Hinterachse eines Kraftfahrzeugs, der zwischen zwei Längsträgern zwei zueinander beabstandete Querträger umfasst und die Längsträger jeweils endseitig Verbindungslager zum Fahrzeugaufbau hin aufweisen und an den Querträgern ein Differential gehalten ist und die Längsträger Lenkerlager für Radführungsglieder aufweisen und jeder Längsträger (2, 3) eine bogenförmige Durchlassöffnung (15) zwischen eckseitigen Stützpfeilern (6, 9 und 7, 8) des Rahmengestells aufweist an denen die Längs- und Querträger (2, 3 und 4, 5) endseitig angeformt sind und die Stützpfeiler (6, 9 und 7, 8) wegragend angeformte Arme (10, 11 12 und 13) für die Verbindungslager (10a, 11a, 12a und 13a) umfassen und der zwischen den Stützpfeilern (8, 9) vorn liegend angeordnete Querträger (5) - in Bezug auf die Fahrtrichtung (F) - eine bogenförmige Ausrundung (19) mit einer Lageraufnahme (18) für das Differential (17) aufweist und der hinten liegende Querträger (4) zwischen den Stützpfeilern (6, 7) eine gradlinige Erstreckung besitzt, **dadurch gekennzeichnet dass** der Fahrschemel (1) aus einem einteilig gegossenen Rahmengestell mit profilierten Hohlträgern für die Längs- und Querträger (2, 3 und 4, 5) besteht und an den Stützpfeilern des Rahmengestells in den Armen jeweils am freien Ende die Verbindungslager angeordnet sind wobei die beiden vorn liegenden Verbindungslager in einer tiefer gelegenen horizontalen Ebene angeordnet sind als die beiden weiteren hinten liegenden Verbindungslager, welche in einer höher gelegenen horizontalen Ebene liegen, und dass die Stützpfeiler (6, 7) zwischen dem hinten liegenden Querträger (4) und den Längsträgern (2, 3) am unteren Ende eine Lageraufnahme (25) für einen Radführungslenker und am abgekehrten oberen Ende in den wegragenden Armen (10, 11) eine Lageraufnahme (26) für einen oberen Querlenker sowie für eine Befestigungslasche (27) eines Stabilisator aufweist.

2. Fahrschemel nach Anspruch 1, **dadurch gekennzeichnet, dass** an den Stützpfeilern (6, 7 und 8, 9) des Rahmengestells in den Armen (10, 11, 12 und 13) jeweils am freien Ende die Verbindungslager (10a, 11a, 12a und 13a) angeordnet sind, wobei die beiden vorn liegenden Verbindungslager (12a, 13a) - in Bezug auf die Fahrtrichtung (F) - in einer tiefer gelegenen horizontalen Ebene (x-x) angeordnet sind als die beiden weiteren hinten liegenden Verbindungslager (10a, 11a) in der höher gelegenen horizontalen ebene (y-y).

3. Fahrschemel nach den Ansprüchen 1 oder 2, **dadurch gekennzeichnet, dass** in der bogenförmigen Ausrundung (19) des vorn liegenden Querträgers (5) ein verstärkendes Knotenelement zur Lageraufnahmen (18) für einen vorderen Bereich des Differentials (17) angeordnet ist und zwischen dem hinteren Querträger (4) und den Stützpfeilern (6, 7) jeweils weitere Lageraufnahmen (20, 21) für beidseitige Lager des hinteren Bereichs des Differentials (17) angeordnet sind.

4. Fahrschemel nach den Ansprüchen 1, 2 oder 3, **dadurch gekennzeichnet, dass** die Lageraufnahme (18) innerhalb des vorn liegenden Querträgers (5) zwischen Seitenwandungen (S1 und S2) eingebettet angeordnet ist und das Knotenelement der Lageraufnahme (18) äußere in den Querträger (5) zu beiden Seiten der Lageraufnahme (18) eingeformte profilbildende Eindrückungen (20) aufweist.

5. Fahrschemel nach den Ansprüchen 1, 2, 3 oder 4, **dadurch gekennzeichnet, dass** der hinten liegenden Querträger (4) in einem unteren Bereich des Stützpfeilers (6, 7) des Rahmengestells angeformt ist und sich in Verlängerung des Querträgers (4) die wegragenden Arme (10, 11) für die Verbindungslager (10a, 11a) an die Stützpfeiler (6, 7) anschließen.

6. Fahrschemel nach einem der vorhergehenden Ansprüche, **dadurch gekennzeichnet, dass** das Differential (17) zwischen den Längs- und Querträgern (2, 3 und 4, 5) und von diesen umgeben eingebettet angeordnet ist und in der Durchlassöffnung (15) des Längsträgers (2, 3) jeweils eine Antriebswelle (28) des Differentials (17) durchgeführt angeordnet ist.

7. Fahrschemel nach einem der vorhergehenden Ansprüche, **dadurch gekennzeichnet, dass** die Durchtrittsöffnung (15) unterseitig einen Versteifungsriegel (29) aufweist, der mit den Stützpfeilern (6, 9) bzw. (7, 8) verbunden ist.

8. Fahrschemel nach einem der vorhergehenden Ansprüche, **dadurch gekennzeichnet, dass** der hinten liegende Querträger (4) einen rechteckförmigen Querschnitt aufweist und hochkant ausgerichtet ist.

## Claims

1. Subframe for a rear axle of a motor vehicle, said subframe comprising two cross members, which are spaced apart from each other, between two longitudinal members, and the end sides of the longitudinal members each having connecting bearings toward the vehicle body, and a differential being held on the cross members, and the longitudinal members having link bearings for wheel guiding elements, and each longitudinal member (2, 3) having a curved passage opening (15) between supporting pillars (6, 9 and 7, 8) at the corners of the framework, on which supporting pillars the end sides of the longitudinal and cross members (2, 3 and 4, 5) are integrally formed, and the supporting pillars (6, 9 and 7, 8) comprising arms (10, 11, 12 and 13), which are integrally formed thereon in protruding manner, for the connecting bearings (10a, 11a, 12a and 13a), and the front cross member (5) between the supporting pillars (8, 9) having - with respect to the direction of travel (F) - a curved rounded portion (19) with a bearing receptacle (18) for the differential (17), and the rear cross member (4) between the supporting pillars (6, 7) having a rectilinear extent, **characterized in that** the subframe (1) comprises a framework which is cast as a single part and has profiled hollow members for the longitudinal and cross members (2, 3 and 4, 5), and the connecting bearings are arranged at the respective free ends of the arms on the supporting pillars of the framework, with the two front connecting bearings being arranged in a lower horizontal plane than the two further, rear connecting bearings, which lie in a higher horizontal plane, and **in that** the supporting pillars (6, 7) between the rear cross member (4) and the longitudinal members (2, 3) have a bearing receptacle (25) for a wheel guiding link at the lower end and, in the protruding arms (10, 11) at the upper end which is remote therefrom, have a bearing receptacle (26) for an upper transverse link and for a fastening plate (27) of a stabilizer.

2. Subframe according to Claim 1, **characterized in that** the connecting bearings (10a, 11a, 12a, and 13a) are arranged at the respective free ends of the arms (10, 11, 12 and 13) on the supporting pillars (6, 7 and 8, 9) of the framework, with the two front connecting bearings (12a, 13a) - with respect to the direction of travel (F) - being arranged in a lower horizontal plane (x-x) than the two further, rear connecting bearings (10a, 11a) in the higher horizontal plane (y-y).

3. Subframe according to Claim 1 or 2, **characterized in that** a reinforcing junction element of the bearing receptacle (18) for a front region of the differential (17) is arranged in the curved rounded portion (19) of the front cross member (5), and further bearing receptacles (20, 21) for bearings on both sides of the rear region of the differential (17) are arranged in each case between the rear cross member (4) and the supporting pillars (6, 7).

4. Subframe according to Claims 1, 2 or 3, **characterized in that** the bearing receptacle (18) is embedded between side walls (S1 and S2) within the front cross member (5), and the junction element of the bearing receptacle (18) has outer, profile-forming impressions (22) molded into the cross member (5) on both sides of the bearing receptacle (18).

5. Subframe according to Claims 1, 2, 3 or 4, **characterized in that** the rear cross member (4) is integrally formed in a lower region of the supporting pillar (6, 7) of the framework, and the protruding arms (10, 11) for the connecting bearings (10a, 11a) are connected to the supporting pillars (6, 7) as an extension of the cross member (4).

6. Subframe according to one of the preceding claims, **characterized in that** the differential (17) is embedded between the longitudinal and cross members (2, 3 and 4, 5) and such that it is surrounded thereby, and a respective drive shaft (28) of the differential (17) is passed through the passage opening (15) of the longitudinal member (2, 3).

7. Subframe according to one of the preceding claims, **characterized in that** the passage opening (15) has, on the lower side, a stiffening bolt (29) which is connected to the supporting pillars (6, 9) and/or (7, 8).

8. Subframe according to one of the preceding claims, **characterized in that** the rear cross member (4) has a rectangular cross section and is oriented with the edge uppermost.

## Revendications

1. Faux-châssis pour un essieu arrière d'un véhicule automobile, qui comprend, entre deux longerons, deux traverses espacées l'une par rapport à l'autre, et les longerons présentant chacun du côté de l'extrémité des supports de liaison en direction de la caisse du véhicule, et un différentiel étant fixé aux traverses, et les longerons présentant des supports de bras de liaison pour des organes de guidage des roues, et chaque longeron (2, 3) présentant une ouverture de passage (15) en forme d'arc entre des montants (6, 9 et 7, 8) du bâti situés au niveau des coins, sur lesquels sont façonnés les longerons et les traverses (2, 3 et 4, 5) au niveau des extrémités, et les montants (6, 9 et 7, 8) comprenant des bras (10, 11, 12 et 13) façonnés de manière saillante pour les supports de liaison (10a, 11a, 12a et 13a), et la traverse (5) disposée à l'avant entre les montants (8, 9) - par rapport à la direction de conduite (F) - présentant un arrondi (19) en forme d'arc avec un logement de support (18) pour le différentiel (17) et la traverse (4) disposée à l'arrière possédant une étendue rectiligne entre les montants (6, 7), **caractérisé en ce que** le faux-châssis (1) se compose d'un bâti coulé d'une seule pièce avec des supports creux profilés pour les longerons et les traverses (2, 3 et 4, 5), et les supports de liaison sont disposés au niveau des montants du bâti dans les bras à chaque fois à l'extrémité libre, les deux supports de liaison situés en avant étant disposés dans un plan horizontal situé plus bas par rapport aux deux autres supports de liaison situés en arrière, qui se situent dans un plan horizontal situé plus haut, et
**en ce que** les montants (6, 7) entre la traverse (4) située en arrière et les longerons (2, 3) à l'extrémité inférieure présentent un logement de support (25) pour un bras de liaison de guidage de roue, et à l'extrémité supérieure opposée, dans les bras saillants (10, 11), un logement de support (26) pour un bras de liaison transversal supérieur ainsi que pour une patte de fixation (27) d'un stabilisateur.

2. Faux-châssis selon la revendication 1, **caractérisé en ce que** les supports de liaison (10a, 11a, 12a et 13a) sont disposés sur les montants (6, 7 et 8, 9) du bâti, dans les bras (10, 11, 12 et 13), à chaque fois à l'extrémité libre, les deux supports de liaison (12a, 13a) situés en avant - par rapport à la direction d'avance (F) - étant disposés dans un plan horizontal situé plus bas (x-x) que les deux autres supports de liaison (10a, 11a) situés en arrière, dans le plan horizontal situé plus haut (y-y).

3. Faux-châssis selon la revendication 1 ou 2, **caractérisé en ce que** dans l'arrondi (19) en forme d'arc de la traverse (5) située en avant, est disposé un élément nodal de renforcement du logement de support (18) pour une région avant du différentiel (17), et entre la traverse arrière (4) et les montants (6, 7) sont disposés à chaque fois d'autres logements de support (20, 21) pour des supports des deux côtés de la région arrière du différentiel (17).

4. Faux-châssis selon la revendication 1, 2 ou 3, **caractérisé en ce que** le logement de support (18) est disposé de manière encastrée à l'intérieur de la traverse (5) située en avant entre des parois latérales (S1 et S2), et l'élément nodal du logement de support (18) présente des parties renfoncées extérieures (22) formant un profil et formés à l'intérieur de la traverse (5) des deux côtés du logement de support (18).

5. Faux-châssis selon 1 revendication 1, 2, 3 ou 4, **caractérisé en ce que** la traverse (4) située en arrière est façonnée dans une région inférieure du montant (6, 7) du bâti, et les bras saillants (10, 11) pour les supports de liaison (10a, 11a) se raccordent aux montants (6, 7) dans le prolongement de la traverse (4).

6. Faux-châssis selon l'une quelconque des revendications précédentes, **caractérisé en ce que** le différentiel (17) est encastré entre les longerons et les traverses (2, 3 et 4, 5) et est entouré par ceux-ci, et un arbre d'entraînement (28) respectif du différentiel (17) est guidé dans l'ouverture de passage (15) du longeron (2, 3).

7. Faux-châssis selon l'une quelconque des revendications précédentes, **caractérisé en ce que** l'ouverture de passage (15) présente du côté inférieur un goujon de renforcement (29), qui est connecté aux montants (6, 9), respectivement (7, 8).

8. Faux-châssis selon l'une quelconque des revendications précédentes, **caractérisé en ce que** la traverse (4) située à l'arrière présente une section transversale rectangulaire et est disposée verticalement.
